# EUROPEAN PATENT APPLICATION

(11) **EP 2 050 621 A1**
(43) Date of publication of application: **22.04.2009**
(21) Application number: 07118582.1
(22) Date of filing: 16.10.2007
(51) Int. Cl.: B60R 11/02

(54) **Holder for an infotainment unit**

(71) Applicant: Ford Global Technologies, LLC, Dearborn, MI 48126 (US)
(72) Inventor: Andersson, Kristian, 519 94 Björketorp (SE); Hellman, Håkan, 434 94 Vallda (SE)
(74) Representative: Bergquist, Kjell Gunnar

(57) **Abstract**

The invention relates to an attachment means (10) for a portable infotainment unit (15) in a vehicle. The attachment means (10) comprises a first portion (11) arranged to be fixedly attached to an interior surface of the vehicle and a second portion (12) attached to the first portion (11) by a pivot joint (13), wherein the infotainment unit (19) is releasably attached to the second portion (12), and that the second portion (12) is arranged foldable from a stowed position to a raised active position in which the infotainment unit (15) can be attached.

## Description

### TECHNICAL FIELD

The present invention relates to a means for attaching an infotainment unit in a vehicle.

### BACKGROUND ART

Owners of motor vehicles are often faced with the problem of finding means for attaching infotainment units or other electronic equipment purchased separate from the vehicle. Some manufacturers of electronic equipment or manufacturers specializing in after-market products will provide attachments adapted for a particular product and/or for different makes or models of vehicles. After-market attachment means are sometimes mounted by an authorized garage or dealer or by a workshop specializing in electronic equipment, but are more often mounted by the owner of the vehicle. Attachment means of this type mounted by the owner may sometimes be positioned in locations not foreseen by the vehicle manufacturer and the standard of the attachments may vary greatly with respect to vehicle safety and their behaviour during a collision. Should an improperly mounted attachment means holding an electronic unit become detached during impact conditions, it may cause harm to the occupants of the vehicle. For obvious reasons, the vehicles manufacturers are unable to perform vehicle crash tests for every possible make and model of such attachment means mounted in every possible location in the vehicle.

The invention relates to an improved attachment means for an infotainment unit in a vehicle and a fastener means for use with such an attachment means. The attachment means according to the invention is intended to solve the above problems relating to unsuitable mounting locations, as well as the problem relating to safety for the occupants during impact conditions, as stated above.

### DISCLOSURE OF INVENTION

The above problems have been solved by a method and an arrangement according to the appended claims.

According to a preferred embodiment, the invention relates to an attachment means arranged to support a portable infotainment unit in a vehicle. In this context the term "portable infotainment unit" refers any portable electronic device that is carried by a user and may be used for displaying, playing back, storing or recording information in or convertible to digital form. Examples of such units are portable navigator units, music players, data storage devices, telephones and similar devices. The attachment means comprises a first portion fixedly attached to an interior surface of the vehicle and a second portion attached to the first portion by a pivot joint, wherein the infotainment unit is releasably attached to the second portion. The second portion is arranged to be foldable from a stowed position to a raised active position in which the infotainment unit can be attached.

When the second portion is arranged in its stowed position it is arranged to cover at least part of an outer surface of the first portion. In a preferred example, the second portion may cover the entire outer or upper surface of the first portion. An outer edge section may be arranged to substantially encompass a circumferential side section of the first section. The first and second portions may be located with their main longitudinal planes arranged in parallel when folded together in the stowed position.

The first portion is arranged fixedly attached to the interior surface by at least one mechanical fastener. The interior surface may be any suitable interior surface in the vehicle, but the attachment means is preferably attached to a surface on, in or adjacent a dashboard in the forward part of the vehicle passenger compartment. For example, the attachment means may be attached on top of the dashboard between two front seats, or to one side of the dashboard adjacent an A-pillar. Depending on the location of the attachment means, the mounting may be more or less permanent. For instance, when mounted centrally on top of the dashboard, the securing means are required to penetrate the visible outer panel to allow attachment to a fixed structure behind the panel. This mounting would be permanent due to the holes in the outer panel required for mounting the attachment means. Alternatively, the attachment means may be mounted in a structure that is replaceable in itself, such as a cover or grille for a loudspeaker unit. Hence, even though the holes in such a structure would be permanent, this structure could be replaced if it is desired to remove the attachment means.

As described above, the attachment means may comprise a first portion that is fixedly attached to the interior surface of the vehicle and connected to a second portion by a pivot joint located substantially parallel to a pair of common side edges or facing contact surfaces. This allows the first and second portions to be folded relative to each other. In addition, the first portion may be provided with an additional pivot joint or rotatable means. This rotatable means can allow the combined first and second portions to be rotatable relative to the interior surface about an axis at substantially right angles to the lower surface of the first portion.

The first portion of the attachment means may comprise a first part is that is fixedly attached to the interior surface of the vehicle and a second part that is provided with said pivot joint. The second part of the first portion may be rotatable relative to the first part. Preferably, the second part may be rotatable relative to the first part about an axis at right angles to the contact surfaces between the first and second parts. Depending on the position of the attachment means in the vehicle, the second part that may be rotatable over a predetermined angle relative to a central datum position on the first part. This angle may be selected freely, although when mounted on a dashboard or similar in front of one or more users, a suitable angle may be about ±45°.

As described above, the second portion, being foldable relative to the first portion by means of a pivot joint, may be raised to its active position. With an infotainment unit attached the second portion may be angled relative to the first portion to avoid reflections in a display surface of said infotainment unit.

The second portion is provided with snap-on means or a similar mechanical quick-connection arranged to cooperate with a corresponding attaching means on the infotainment unit. According to a first example, the infotainment unit may be an independent battery operated device that is merely connected to the attachment means by means of a quick-connection. Such a unit can be operated independent from an on-board infotainment system, or may be in wireless communication with said system via a suitable wireless protocol, such as Bluetooth ©.

According to a second example, the second portion may also be provided with at least one electrical connector arranged to connect with the infotainment unit. The quick-connection and the electrical connector may be separate components or be integrated in a single connector. The type of electrical connector is dependent on the type of infotainment unit and the amount and type of information to be transmitted from or received by the said unit. Hence, the electrical connector may be a customized pin-out or pin-in connector adapted for a pin connector of the particular infotainment unit used. In this text the term "electrical connector" is used as a general term for connectors for supplying electrical power and/or for a connector for transmitting analog or digital signals. Consequently, an electrical connector may be used for supplying power to an infotainment unit and/or for charging batteries in said unit. The source of electrical power may be the on-board infotainment system and/or the electrical system of the vehicle. A unit that is only supplied with electrical power can be operated independent from an on-board infotainment system, or may be in wireless communication with said system via a suitable wireless protocol, such as Bluetooth ©.

According to a third example, an electrical connector may also be used for transmitting signals, transferring music files, uploading or downloading data or handling similar information between the infotainment unit and an on-board infotainment system. Finally, the electrical connector may be used for supplying electrical power and for transferring signals or data as described above. Because connectors of this type are customized, the number of pins varies considerably. For instance, a unit such as a Garmin © portable navigator may use up to 34 pins. Alternatively a standardized connector such as a USB-contact or a similar connector adapted for infotainment units with standardized connectors may be used. At least one electrical connector or one or more pins in a connector may be connected to a power supply in the vehicle, in order to provide power for driving and/or charging the infotainment unit. At least one electrical connector as described above may be connected to an in-vehicle infotainment system. If the infotainment unit is a dvd-player or a data storage device, it is possible to transfer video or image files to a display screen or additional dvd-players in the vehicle. Similarly, music files from a unit such as an mp3-player, Ipod ©, wma-player or similar may be distributed to the in-vehicle stereo system or to individual players plugged into the said system.

In order to allow the attachment means to be used with more that one make or model of infotainment unit the second portion may be replaceable. This is due to the fact that different infotainment units may have attaching means of different types and are likely to have different input/output connectors. In this way the attachment means may be arranged to be adapted to a predetermined infotainment unit by means of replacement of the second portion.

### BRIEF DESCRIPTION OF DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows a schematic view of an attachment means according to one embodiment of the invention;
- Figure 2: shows a side view of the attachment means of Fig.1 in an active position with a navigation unit attached;
- Figure 3: shows a perspective view of the attachment means of Fig.2;
- Figure 4: shows the attachment means of Fig.3 mounted on a dashboard;
- Figure 5: shows an exploded view of an attachment means according to the invention.

### EMBODIMENTS OF THE INVENTION

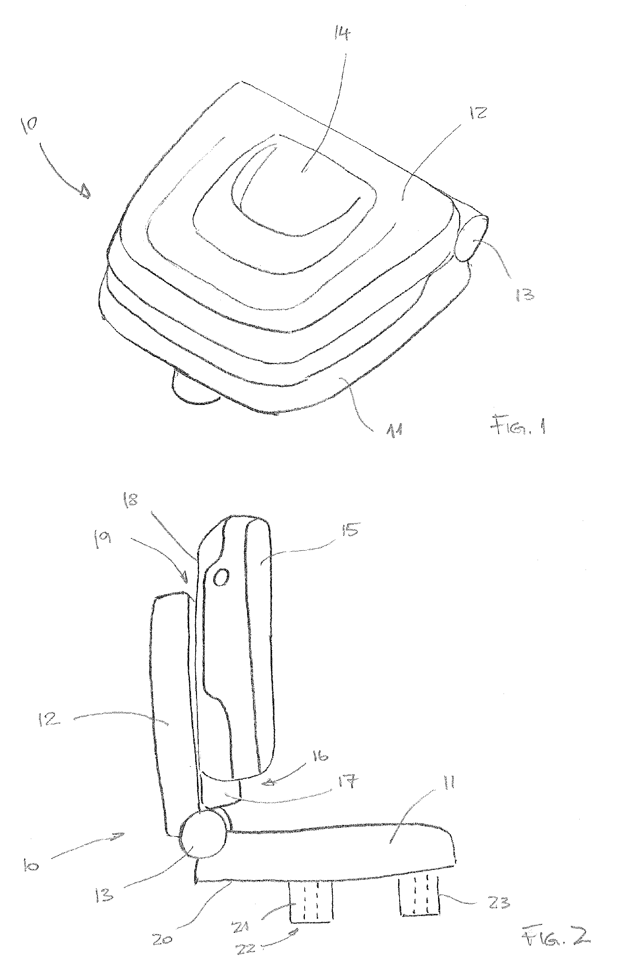

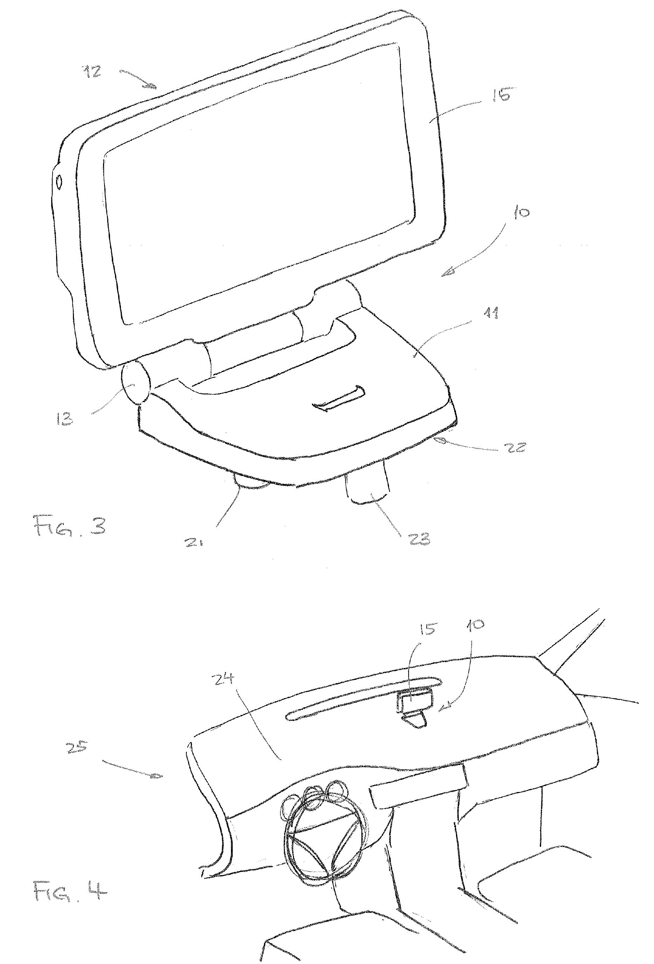

Figure 1 shows a schematic view of an attachment means according to one embodiment of the invention. The figure shows an attachment means 10 arranged to support a portable infotainment unit in a vehicle. The attachment means comprises a first portion 11 that can be fixedly attached to an interior surface of the vehicle (see Fig.4) and a second portion 12 attached to the first portion 11 by a pivot joint 13. In Figure 1 the second portion is shown folded in a stowed position from which it can be raised to an active position in which the infotainment unit can be attached. In order to raise the second portion 12 a release button 14 located in the surface that faces outwards when in the stowed position is actuated to release the second portion 12 from the facing surface of the first portion 11.

When the second portion 12 is arranged in its stowed position it is arranged to cover the part of an outer surface of the first portion 11 facing the second portion 12. In the embodiment shown in Figure 1, the first and second portions 11, 12 are located with their main longitudinal planes arranged in parallel when folded together in the stowed position.

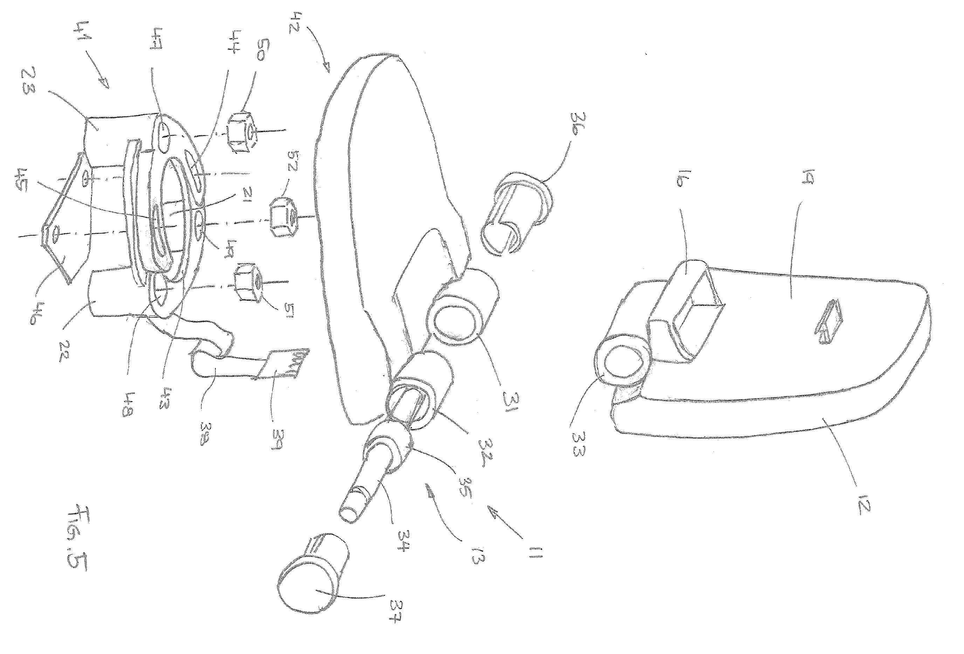

Figure 2 shows a side view of the attachment means of Fig.1 in an active position with a navigation unit 15 attached. The second portion 12 is provided with a releasable snap-on means 16 (see Fig.5) arranged to cooperate with a corresponding attaching means (not shown) on the navigation unit 15. The second portion is provided with an electrical connector 17 arranged to connect with the infotainment unit 15. In this example, the snap-on means 16 is integrated with the electrical connector 17, and the rear surface 18 of the navigation unit 15 is supported by part of a support surface 19 of the second portion 12. The type of electrical connector 17 is dependent on the type of infotainment unit and the amount and type of information to be transmitted from or received by the said unit. In the case of the attachment means 10 shown, the connector 17 is a customized pin-out connector adapted for a pin connector of the particular make and model of navigation unit 15 used. For instance, a unit such as a Garmin © portable navigator uses up to 34 pins. The infotainment unit 15 shown in this example is not supplied with electrical power via the electrical connector 17.

The attachment means 10 comprises a first portion 11 arranged to be fixedly attached to an interior surface of the vehicle. In order to attach the first portion 11, its lower surface 20 is provided with spacers 21, 22, 23 extending in parallel away from the lower surface 20. The spacers 21, 22, 23 are intended to be inserted through holes (not shown) prepared in a surface or panel in the interior surface onto which the attachment means 10 is to be mounted. The length of the spacers 21, 22, 23 is selected so that the ends of the spacers are in contact with a structural surface inside the panel when the lower surface 20 of the first portion 11 is in contact with the surface of the panel. The attachment means 10 is attached to the structural surface by means of fasteners, such as screws, inserted through the structural surface and into the spacers 21, 22, 23.

Figure 3 shows a perspective view of the attachment means 10 of Figure 2. As described above, the second portion 12 is foldable relative to the first portion 11 by means of the pivot joint 13. When raised to its active position, the navigation unit 15 attached the second portion 12 can be angled relative to the first portion 11 to avoid reflections in a display surface of said navigation unit 15. Figure 4 shows the attachment means 10 and the navigation unit 15 of Figure 3 mounted an upper surface 24 of a dashboard 25 in a vehicle.

Figure 5 shows an exploded view of an attachment means 10 according to the invention. With reference to Figure 2, the attachment means 10 comprises said first portion 11 arranged to be fixedly attached to an interior surface of the vehicle and said second portion 12 attached to the first portion 11 by a pivot joint 13. In order to allow the attachment means 10 to be used with more that one make or model of infotainment unit the second portion 12 can be replaceable. As different infotainment units have attaching means of different types and are likely to have different input/output connectors, the can be arranged to be adapted to a predetermined infotainment unit by replacing the second portion 12. The pivot joint 13 comprises a pair of first bearing sleeves 31, 32 which are spaced apart a predetermined distance to accommodate a second bearing sleeve 33. In this example the pair of first bearing sleeves 31, 32 are part of the first portion 11 and the second bearing sleeve 33 is part of the second portion 12. In order to assemble the attachment means 10 the bearing sleeves 31, 32, 33 are aligned along a common axis. An axle 34 with a central bearing part 35 is inserted through the bearing sleeves until the central bearing part 35 is located in the second bearing sleeve 33. A first and a second end bearing parts 36, 37 are then inserted into the first bearing sleeves 31, 32 respectively. The first and a second end bearing parts 36, 37 are arranged to support the first bearing sleeves 31, 32 and are located coaxially with the respective end of the axle 34. In order to retain the first and a second end bearing parts 36, 37, said bearing parts are provided with resilient tongues which are arranged to snap into corresponding circumferential grooves in the axle 34 when they reach a predetermined assembled position.

The first and a second end bearing parts 36, 37 along with the axle 34 with its central bearing part 35 can be arranged to be removable. In this way the second portion 12 can be removed and replaced with an alternative second portion with a different snap-on means 16 and/or electrical connector 17. Figure 5 schematically shows a cable harness 38 provided with an electrical connector 39. The electrical connector 39 can be attached to the second portion 12 for direct connection with the unit to be connected, or be connected to a customized or standard contact on the second portion 12, which in turn is provided with a connector for a predetermined type of infotainment unit. This allows the use of multiple units using the same attachment means. Examples of such units are portable navigator units, music players, data storage devices, telephones and similar devices.

In addition to providing a pivot joint 13 that allows the second portion 12 of the attachment means 10 to be folded relative to the first portion 11 and to be angled to a desired position, the first portion 11 can be provided with a further rotatable means. This rotatable means can allow the combined first and second portions to be rotatable relative to the interior surface about an axis at substantially right angles to the lower surface of the first portion.

As shown in Figure 5, the first portion 11 of the attachment means may comprise a first part 41 intended to be fixedly attached to an interior surface of the vehicle and a second part 42 that is provided with said rotatable means. The second part 42 of the first portion 11 is rotatable relative to the fixed first part 41. The first part 41 comprises the spacers 21, 22, 23 which are connected by a substantially circular body with a through-hole 43 having a central axis parallel to the spacers 21, 22, 23. A corresponding protrusion (not shown) on the underside of the second part 42 is arranged to cooperate with the through-hole 43 to allow relative rotation between the first and second parts 41, 42. In this example it is desired to limit the relative rotation between the two parts to an angle of ±30° relative to a central datum position. This is achieved by providing a pair of annular slots 44, 45 in the circular body of the first part 41, along the outer periphery of the through-hole 43. The allowed angle of the relative rotation is determined by the radius and the length of these slots 44, 45. A flat plate 46 is attached by screws (not shown) to the underside of the second part 42, through the slots 44, 45. Serrations can be provided on facing surfaces of the first and second parts adjacent the cooperating through-hole and protrusion, in order to allow the parts to be locked in a relative angular position.

The surface of the first part 41 facing the second part 42 is provided with hexagonal recesses 47, 48, 49 for receiving nuts 50, 51, 52 having a corresponding shape. The recesses 47, 48, 49 are located coaxially with corresponding holes through the spacers 21, 22, 23. When mounting the attachment means 10 to the interior surface, cooperating screws (not shown) can be inserted through the supporting structure and the holes in the spacers 21, 22, 23 for attachment to the nuts 50, 51, 52.

Depending on the position of the attachment means in the vehicle, the second part that may be rotatable over a predetermined angle relative to a central datum position on the first part. This angle may be selected freely, although when mounted on a dashboard or similar in front of one or more users, a suitable angle may be about ±45°.

## Claims

1. Attachment means for a portable infotainment unit in a vehicle, **characterized in that** the attachment means comprises a first portion arranged to be fixedly attached to an interior surface of the vehicle and a second portion attached to the first portion by a pivot joint, wherein the infotainment unit is releasably attached to the second portion, and that the second portion is arranged foldable from a stowed position to a raised active position in which the infotainment unit can be attached.

2. Attachment means according to claim 1, **characterized in that,** when in the stowed position, the second portion is arranged to cover at least part of an outer surface of the first portion

3. Attachment means according to claim 1, **characterized in that** the first portion is fixedly attached to the interior surface by at least one mechanical fastener.

4. Attachment means according to claim 1, **characterized in that** the first portion comprises a first part is fixedly attached to the interior surface and a second part that is provided with said pivot joint and is rotatable relative to the first part.

5. Attachment means according to claim 4, **characterized in that** the second part is rotatable relative to the first part about an axis at right angles to the contact surfaces between the first and second parts.

6. Attachment means according to claim 5, **characterized in that** the second part that is rotatable over an angle of ±45° relative to a central datum position on the first part.

7. Attachment means according to claim 1, **characterized in that** the second portion is provided with snap-on means arranged to cooperate with a corresponding attaching means on the infotainment unit.

8. Attachment means according to claim 1, **characterized in that** the second portion is provided with at least one electrical connector arranged to connect with the infotainment unit.

9. Attachment means according to claim 8, **characterized in that** at least one electrical connector is connected to a power supply.

10. Attachment means according to claim 8 or 9, **characterized in that** at least one electrical connector is connected to an in-vehicle infotainment system.

11. Attachment means according to claim 1, **characterized in that** the second portion is replaceable.

12. Attachment means according to claim 11, **characterized in that** the attachment means is arranged to be adapted to a predetermined infotainment unit by means of replacement of the second portion.

13. Vehicle **characterized in that** it comprises an attachment means according to claim 1.
